# EUROPÄISCHE PATENTSCHRIFT

(11) **EP 1 301 647 B1**
(45) Veröffentlichungstag und Bekanntmachung des Hinweises auf die Patenterteilung: **10.03.2004**
(21) Anmeldenummer: 01969404.1
(22) Anmeldetag: 17.07.2001
(51) Int. Cl.: C23C 4/00

(54) **VERFAHREN ZUM HERSTELLEN VON SCHNEIDKÖRPERN MIT EINER SCHNEIDSCHICHT**
METHOD FOR THE PRODUCTION OF CUTTING BODIES WITH A CUTTING LAYER
PROCEDE POUR PRODUIRE DES CORPS COUPANTS COMPORTANT UNE COUCHE COUPANTE

(30) Priorität: 18.07.2000 DE 10034763
(43) Veröffentlichungstag der Anmeldung: 16.04.2003
(73) Patentinhaber: Siegfried Gölz GmbH & Co., 53940 Hellenthal-Blumenthal (DE)
(72) Erfinder: BERGMANN, Hans, Wilhelm DI, verstorben (DE); WILDENBURG, Jörg, 95502 Himmelkron (DE); WALLMANN, Clemens, 91056 Erlangen (DE)
(74) Vertreter: Müller-Gerbes, Margot, Dipl.-Ing.
(86) Internationale Anmeldenummer: PCT/EP2001/008236
(87) Internationale Veröffentlichungsnummer: WO 2002/006553

(56) Entgegenhaltungen:
- WO-A-94/20252
- WO-A-98/15672

## Beschreibung

Die Erfindung bezieht sich auf ein Verfahren zum Herstellen von Schneidkörpern mit einem Grundkörper und mit einer Schneidschicht enthaltend Hartstoffe, bei dem auf den Grundkörper ein die spätere Schneidschicht bildendes, die Hartstoffkörner enthaltendes Metallpulvergemisch mittels eines Laserstrahles aufgeschmolzen wird.

Ein solches Verfahren zum Herstellen von Schneidbelägen auf Basis von Hartstoffen, die beispielsweise Diamantkörner enthalten, ist in der DE 195 20 149 A1 beschrieben. Hierbei wird zur Ausbildung der gewünschten Schneidschicht eine Kokille als Form in Verbindung mit dem Grundkörper, der den Boden bildet, eingesetzt.

Zur Verbesserung der Haftung zwischen der Schneidschicht und einem Grundkörper aus Stahl ist es beispielsweise aus der DE 197 44 214 A1 bekannt, eine Zwischenschicht aus einem Nichteisenmetall oder einer Nichteisenmetallverbindung oder einer Nichteisenmetallegierung zwischen der Schneidschicht und dem Grundkörper aufzubringen.

Der Erfindung liegt die Aufgabe zugrunde, die Herstellung von Schneidkörpern mit einer Schneidschicht kostengünstiger und rationeller zu gestalten bei gleichbleibenden oder verbesserten Gebrauchseigenschaften der herstellbaren Schneidkörper.

Diese Aufgabe wird durch Ausgestaltung des gattungsgemäßen Verfahrens gemäß der Erfindung in der Weise gelöst, daß ein Grundkörper-Rohling eingesetzt wird, der mindestens eine Vertiefung aufweist und der Grundkörper-Rohling mit Vertiefungen als Kokille für die Schneidschicht verwendet wird und die Vertiefungen des Grundkörper-Rohlings durch fortlaufendes Einbringen und Aufschmelzen des hartstoffhaltigen Metallpulvergemisches mittels eines Laserstrahles in einem Beschichtungsverfahren mit der Schneidschicht bis zur gewünschten Schichtdicke aufgefüllt werden und ein Schneidkörper-Rohling erhalten wird und aus dem Schneidkörper-Rohling mittels Durchtrennen desselben die gewünschten Schneidkörper vereinzelt werden.

Erfindungsgemäß wird somit eine wirtschaftliche Produktionsmethode vorgeschlagen, bei der eine Vielzahl von Schneidkörpern in einem gemeinsamen Produktionsablauf hergestellt werden können und darüber hinaus der Aufwand und das Erstellen von Kokillen entfällt. Der Grundkörper-Rohling für den Schneidkörper ist zugleich als Kokille ausgebildet.

Vorteilhafte Weiterbildungen des erfindungsgemäßen Verfahrens sind den kennzeichnenden Merkmalen der Unteransprüche entnehmbar.

Bei der Vereinzelung der Schneidkörper aus dem hergestellten Schneidkörper-Rohling kann dieser im Bereich des Grundkörper-Rohlings durchtrennt werden, um die Schneidkörper zu erhalten.

Es ist auch möglich, nach dem Herstellen der Schneidschicht den Grundkörper-Rohling bereichsweise zwischen den mit der Schneidschicht aufgefüllten Vertiefungen abzutragen.

Als Grundkörper-Rohlinge können mit Vorteil rotationssymmetrische Stangen oder Rohre eingesetzt werden, die mit Vertiefungen in Form radialer ringförmiger Nuten oder mit parallel zur Längsachse verlaufenden Nuten oder wendelförmigen Nuten ein- oder mehrgängig ausgebildet sind.

Darüber hinaus können auch Grundkörper-Rohlinge in länglicher Form, Stangenform oder Rohrform eingesetzt werden, die mit einem vieleckigen Querschnitt wie vierkant, sechskant oder ovalem Querschnitt ausgebildet sind und die ebenfalls mit radialen Nuten oder parallel zur Längsachse verlaufenden Nuten oder wendelförmig verlaufenden Nuten als Vertiefungen ausgebildet werden.

Auch Grundkörper-Rohlinge in Gestalt einer Scheibe können zur Herstellung von Schneidkörpern eingesetzt werden, wobei diese entweder an ihrer Stirnseite oder auf einer Planenseite mit Vertiefungen wie Nuten ausgebildet werden, die nachfolgend mit der Schneidschicht aufgefüllt werden.

Nach einer weiteren Ausgestaltung der Erfindung wird vorgeschlagen, daß ein zylindrischer Grundkörper-Rohling mit einer Mehrzahl von Grundkörpern für Schneidkörper umfassenden Dimensionen vorgesehen wird und in den Grundkörper-Rohling eine der Mehrzahl der Schneidkörper entsprechende Anzahl von radialen ringförmigen Nuten, die durch Zwischenstege voneinander beabstandet werden, eingearbeitet werden und bei um seine Längsachse rotierendem Grundkörper-Rohling die als Kokille dienenden Nuten durch fortlaufendes Einbringen und Aufschmelzen des hartstoffhaltigen Metallpulvergemisches mittels des Laserstrahles in einem Beschichtungs-verfahren mit der Schneidschicht bis zu der gewünschten Schichtdicke aufgefüllt werden und der erhaltene Schneidkörper-Rohling mittels Durchtrennen des Grundkörper-Rohlings im Bereich der abgetragenen Zwischenstege vereinzelt zu den Schneidkörpern wird. Erfindungsgemäß wird somit eine wirtschaftliche Produktionsmethode vorgeschlagen, bei der eine Vielzahl von Schneidkörpern in einem gemeinsamen Produktionsablauf hergestellt werden kann, d. h. parallel zueinander.

Es ist auch möglich, die Zwischenstege bis mindestens zur Tiefe der Nuten abzutragen, wodurch die in den Nuten aufgebrachten Schneidschichten seitlich freigelegt werden.

Eine Form der ringförmigen Nut, die mit der Schneidschicht anschließend aufgefüllt wird, ist die Ausbildung derselben mit einem hinterschnittenen Querschnitt, ebenso kann sie auch gerade oder gespreizt, d. h. trichterförmig erweitert sein.

Gemäß der Erfindung können die einzelnen Herstellungsschritte für die gleichzeitige Herstellung einer Mehrzahl oder Vielzahl von Schneidkörpern in einer Aufspannung, d. h. mittels eines Grundkörper-Rohlings durchgeführt werden. Basierend auf einer konventionellen Drehmaschine kann dieser ein Laserbearbeitungskopf mit entsprechender Zuführung des Hartstoff enthaltenden Metallpulvergemisches mittels einer Pulverdüse zugeordnet werden.

Als Grundkörper können sowohl massive in Stangenform oder auch solche in Rohrform, bevorzugt dickwandig eingesetzt werden. Auch Zahnstangen oder Scheiben mit entsprechenden Vertiefungen können erfindungsgemäß zu Schneidkörpern ausgebildet werden. Der Grundkörper-Rohling kann sowohl aus Stahl als auch aus einem geeigneten zähen Kunststoff, wie beispielsweise Polyamide, Polyimide, Polyurethan bestehen.

Für die Schneidschichten werden insbesondere Hartstoffe enthaltende Metalle oder Metallverbindungen oder Metallegierungen eingesetzt. Das Metall, die Metallverbindung bzw. die Metallegierung wird dann mittels des Laserstrahles beim Auftreffen auf den Grundkörper bzw. die schon vorhandene Schicht oder nachdem sie an der angeschmolzenen Schicht anhaftet aufgeschmolzen. Hieraus entsteht eine echte Legierung in der Schneidschicht. Der Laserstrahl schmilzt die Oberfläche an und zugleich die metallischen Pulverkörner, die hier auftreffen, woraus sich der Legierungsverbund ergibt. Die herstellbare Stärke der Schneidschicht liegt zwischen üblicherweise 1 bis 7 mm. Als Metallkomponente kommen beispielsweise Eisen, Bronze, Kupfer, Zinn, Aluminium, Titan, Silizium u.a. in Frage. Als Hartstoff werden üblicherweise Diamantkörner eingesetzt, wobei diese üblicherweise eine Größe unter 350 µm bis zu 1 µm aufweisen. Der Gehalt an Diamanten in der Schneidschicht bzw. Pulverschicht kann variieren und maximal bis zu 99 Gew.-% betragen. Der Anteil an Diamantkörnern hängt auch von dem Einsatzgebiet und der Gestalt des Schneidkörpers ab.

Die Erfindung wird nachfolgend anhand eines Ausführungsbeispieles erläutert. Es zeigen:
- Figur 1: ein Diamantsägeseil im Ausschnitt,
- Figur 2: das Herstellen des Grundkörper-Rohlings schematisiert,
- Figur 3: das Herstellen der Schneidschicht in schematisierter Darstellung,
- Figur 4: das Freidrehen und Trennen der Schneidkörper aus dem Grundkörper-Rohling in schematisierter Darstellung.

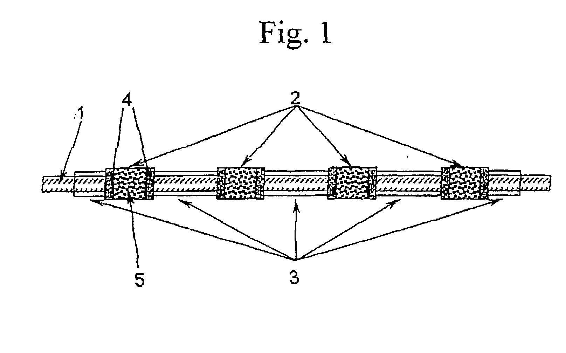

Die Erfindung wird anhand von Schneidkörpern erläutert, die beispielsweise als Seilperlen für Diamantseilsägen dienen. Diamantseilsägen finden hauptsächlich beim Abbau von Naturstein im Steinbruch Verwendung, sind aber seit geraumer Zeit auch in der Baubranche zu finden, um Betonstrukturen zu schneiden und abzutragen. Ein Diamantsägeseil, siehe Figur 1, besteht im allgemeinen aus einem Stahldrahtseil 1, auf dem die Seilperlen oder Schneidkörper 2 in Gestalt sogenannter Diamantringe befestigt sind, die durch Abstandhalter 3 in Position gehalten werden. Die auf dem Seil befestigten Seilperlen haben im allgemeinen einen hülsen- oder ringförmigen Grundkörper 4 mit einer zentrischen Bohrung, die dem Durchmesser des verwendeten Stahldrahtseiles entspricht. Auf der Außenseite des metallischen Grundkörpers befindet sich die Diamanten enthaltende Schneidschicht 5. Die Herstellung der Schneidschicht erfolgt heute üblicherweise pulvermetallurgisch oder galvanisch.

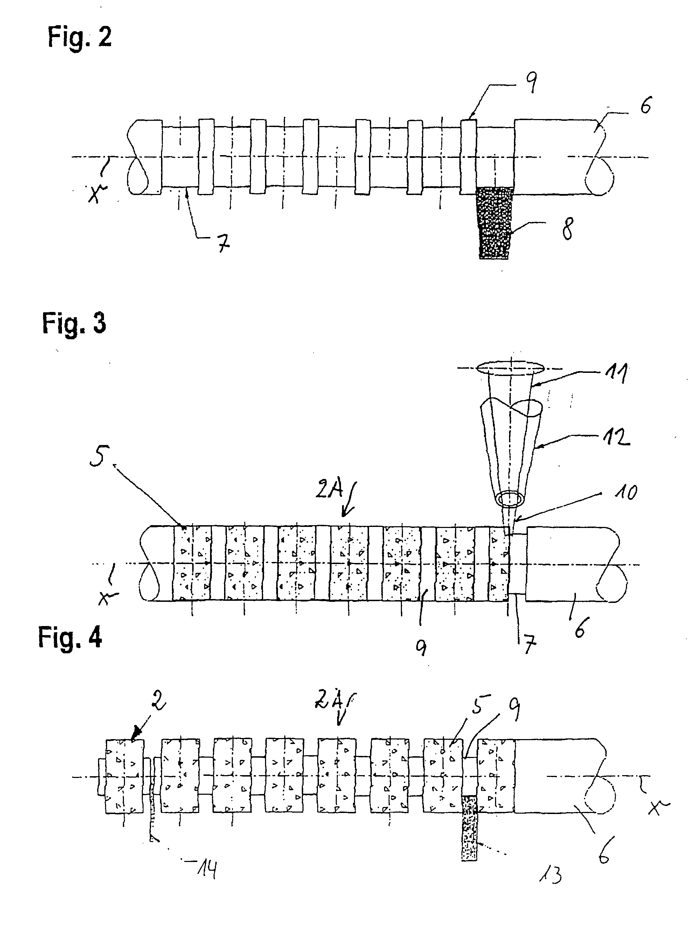

Gemäß der Erfindung wird ein Verfahren zum Herstellen der Schneidkörper bzw. Seilperlen vorgeschlagen, bei der die einzeln aufgeführten Herstellungsprozesse für eine Vielzahl von Seilperlen zusammengefaßt werden und jeweils in einer Aufspannung durchgeführt werden. Wie aus der Figur 2 ersichtlich, wird hierzu ein Grundkörper-Rohling 6, beispielsweise aus Edelstahl, massiv oder in Rohrform in eine hier nicht dargestellten konventionellen Drehmaschine eingespannt. Der Grundkörper-Rohling 6 weist eine Länge auf, dergestalt, daß eine Vielzahl von Seilperlen bzw. Schneidkörpern 2 aus dem Grundkörper-Rohling 6 herstellbar sind. In den Grundkörper-Rohling 6 werden nunmehr entlang seiner Längserstreckung gleichmäßig voneinander durch belassene Zwischenstege 9 beabstandet Nuten 7 durch Zerspanen, beispielsweise mittels eines Formdrehmeißels 8 während der Drehung des Grundkörper-Rohlings 6 hergestellt. Die Nuten 7, die als Füllnuten und zugleich mit dem Grundkörper-Rohling als Kokillen, nämlich Form für die herzustellende Schneidschicht benutzt werden, haben z. B. eine konkave Form, insbesondere eine hinterschnittene Form, wie auch aus dem leicht keilförmig verlaufenden Formdrehmeißel 8 ersichtlich ist. Nach der Herstellung aller Nuten 7 auf dem Grundkörper-Rohling 6 werden die Nuten 7 nacheinander mit einer hartstoffhaltigen Schneidschicht 5 ausgerüstet. Dies geschieht mit Hilfe eines einstufigen lasergestützten Beschichtungsprozesses, bei dem aus einer Pulverdüse 12 mittels Fördergas ein hartstoffhaltiges Metallpulvergemisch 10 in den auf die Oberfläche der Nut 7 fokussierten Laserstrahl 11 injiziert wird, so daß hier ein Aufschmelzungsprozeß des Metallpulvers 10 erfolgt, wobei die Hartstoffteilchen, wie Diamantkörner nur minimal strukturell geschädigt werden. Bei Rotation des Grundkörper-Rohlings 6 um seine Längsachse X wird die Nut 7 schichtweise aufgefüllt, d. h. mindestens mit einer Schicht und so die komplette Schneidschicht 5 für einen Schneidkörper 2 erstellt. Die Schichten können überlappend oder wendelförmig oder axial versetzt ausgebildet werden. Der so erhaltene Schneidkörper-Rohling 2A wird nun vereinzelt.

In einem weiteren Schritt, siehe Figur 4, werden die Zwischenstege 9 zwischen den mit der Schneidschicht 5 angefüllten Nuten 7 beispielsweise mittels einer weiteren Zerspanungsoperation mit einem Formdrehmeißel 13 freigedreht unter Rotation des Schneidkörper-Rohlings 2A um seine Längsachse X und im gleichen sich anschließenden Arbeitsschritt mit einem Abstechmeißel 14 als Seilperle bzw. Schneidkörper 2 vereinzelt. Zur Erhöhung der Wirtschaftlichkeit können auch Mehrfachwerkzeuge eingesetzt werden, so daß z. B. alle Zerspanungsvorgänge oder Trennvorgänge gleichzeitig durchgeführt werden.

## Patentansprüche

1. Verfahren zum Herstellen von Schneidkörpern mit einem Grundkörper und mit einer Schneidschicht enthaltend Hartstoffe, bei dem auf den Grundkörper ein die spätere Schneidschicht bildendes, die Hartstoffkörner enthaltendes Metallpulvergemisch mittels eines Laserstrahles aufgeschmolzen wird, **dadurch gekennzeichnet, daß** ein Grundkörper-Rohling eingesetzt wird, der mindestens eine Vertiefung aufweist und der Grundkörper-Rohling mit Vertiefungen als Kokille für die Ausbildung der Schneidschicht verwendet wird und die Vertiefungen des Grundkörper-Rohlings durch fortlaufendes Einbringen und Aufschmelzen des hartstoffhaltigen Metallpulvergemisches mittels eines Laserstrahles in einem Beschichtungsverfahren mit der Schneidschicht bis zur gewünschten Schichtdicke aufgefüllt werden und ein Schneidkörper-Rohling erhalten wird und aus dem Schneidkörper-Rohling mittels Durchtrennen desselben die gewünschten Schneidkörper vereinzelt werden.

2. Verfahren nach Anspruch 1, **dadurch gekennzeichnet, daß** der Schneidkörper-Rohling im Bereich des Grundkörper-Rohlings durchtrennt wird, um die einzelnen Schneidkörper zu erhalten.

3. Verfahren nach Anspruch 1 oder 2, **dadurch gekennzeichnet, daß** als Grundkörper-Rohling eine rotationssymmetrische Stange oder Rohr verwendet wird, die Vertiefungen in Form radialer ringförmiger Nuten oder mit parallel zur Längsachse oder wendelförmig verlaufenden Nuten ausgebildet ist.

4. Verfahren nach einem der Ansprüche 1 oder 2, **dadurch gekennzeichnet, daß** als Grundkörper-Rohling eine mit einem Vieleckquerschnitt ausgestattete Stange oder Rohr verwendet wird, die mit radialen Nuten oder sich in Längserstreckung parallel zur Längsachse oder wendelförmig verlaufenden Nuten ausgestattet ist.

5. Verfahren nach einem der Ansprüche 1 bis 4, **dadurch gekennzeichnet, daß** als Grundkörper-Rohling eine Scheibe mit an ihrer Stirnseite oder einer Planenseite ausgebildeten Nuten verwendet wird.

6. Verfahren nach einem der Ansprüche 1 bis 5, **dadurch gekennzeichnet, daß** nach dem Herstellen der Schneidschicht der Grundkörper-Rohling bereichsweise zwischen den mit der Schneidschicht aufgefüllten Vertiefungen abgetragen wird.

7. Verfahren nach einem der Ansprüche 1 bis 3, **dadurch gekennzeichnet, daß** ein zylindrischer Grundkörper-Rohling mit einer Mehrzahl von Grundkörpern für Schneidkörper umfassenden Dimensionen vorgesehen wird und in den Grundkörper-Rohling eine der Mehrzahl der Schneidkörper entsprechende Anzahl von radialen ringförmigen Nuten, die durch Zwischenstege voneinander beabstandet werden, eingearbeitet werden und bei um seine Längsache rotierendem Grundkörper-Rohling die als Kokille dienenden Nuten durch fortlaufendes Einbringen und Aufschmelzen des hartstoffhaltigen Metallpulvergemisches mittels des Laserstrahles in einem Beschichtungsverfahren mit der Schneidschicht bis zur gewünschten Schichtdicke aufgefüllt werden und der erhaltene Schneidkörper-Rohling mittels Durchtrennen des Grundkörper-Rohlings im Bereich der Zwischenstege zu den Schneidkörpern vereinzelt wird.

8. Verfahren nach Anspruch 7, **dadurch gekennzeichnet, daß** die Zwischenstege des Schneidkörper-Rohlings bis mindestens zur Tiefe der Nuten abgetragen werden, wodurch die in den Nuten aufgebrachten Schneidschichten seitlich freigelegt werden.

9. Verfahren nach einem der Ansprüche 1 bis 8, **dadurch gekennzeichnet, daß** eine Schneidschicht enthaltend bis zu 99 Gew.-% Diamantkörner hergestellt wird.

10. Verfahren nach einem der Ansprüche 1 bis 9, **dadurch gekennzeichnet, daß** ein Grundkörper-Rohling aus Metall, wie Stahl verwendet wird.

11. Verfahren nach einem der Ansprüche 1 bis 9, **dadurch gekennzeichnet, daß** ein Grundkörper-Rohling aus einem schlagzähen und kerbschlagzähen Kunststoff, wie Polyamide, Polyimide, Polyurethan verwendet wird.

## Claims

1. A method for producing cutting bodies having a base body and a cutting layer containing hard materials, and in which a metal powder mixture forming the subsequent cutting layer and containing the hard material grains is melted via a laser beam onto the base body, **characterised in that** a base body blank having at least one depression is used, and the base body blank having depressions is used as a die for forming the cutting layer, and the recesses of the base body blank are filled by continuously introducing the metal powder mixture containing the hard material and melting via a laser beam in a coating method with the cutting layer to the desired layer thickness, and a cutting body blank is obtained, and the desired cutting bodies are separated from the cutting body blank by severing.

2. The method according to Claim 1, **characterised in that** the cutting body blank is severed in the region of the base body blank in order to obtain the individual cutting bodies.

3. The method according to either of Claims 1 or 2, **characterised in that** a rotationally symmetrical rod or pipe that is conformed with depressions in the form of radially annular grooves or with grooves running parallel to the longitudinal axis or extending in a spiral formation is used as the base body blank.

4. The method according to either of Claims 1 or 2, **characterised in that** a rod or pipe furnished with a polygonal cross section and having radial grooves or grooves extending in lengthwise direction parallel to the longitudinal axis or in a spiral manner is used as the base body blank.

5. The method according to any of Claims 1 to 4, **characterised in that** a disc having grooves formed on the front side or on a plane side is used as the base body blank.

6. The method according to any of Claims 1 to 5, **characterised in that** the base body blank is removed regionally between the recesses filled with the cutting layer after the cutting layer is produced.

7. The method according to any of Claims 1 to 3, **characterised in that** a cylindrical base body blank is provided with a plurality of base bodies for dimensions encompassing cutting bodies, and a number of radial, annular grooves corresponding to the plurality of cutting bodies and separated with respect to one another by intermediate bars are worked into the base body blank, and for the base body blank rotating about its longitudinal axis, the grooves serving as dies are filled by continuously introducing and melting metal powder mixture containing the hard material via the laser beam in a coating process with the cutting layer to the desired layer thickness, and the cutting body blank obtained thereby is separated by severing of the base body blank in the region of the intermediate bars to form the cutting bodies.

8. The method according to Claim 7, **characterised in that** the intermediate bars of the cutting body blank are removed to at least the depth of the grooves, thereby laterally exposing the cutting layers deposited in the grooves.

9. The method according to any of Claims 1 to 8, **characterised in that** a cutting layer containing up to 99 % by weight diamond grains is produced.

10. The method according to any of Claims 1 to 9, **characterised in that** a base body blank of metal, such as steel, is used.

11. The method according to any of Claims 1 to 9, **characterised in that** a base body blank of an impact-resistant and notched impact-resistant plastic, such as polyamide, polyimide, polyurethane, is used.

## Revendications

1. Procédé pour produire des corps coupants avec un corps de base et une couche coupante comportant des matériaux durs, dans lequel un mélange de poudres métalliques contenant les grains de matériaux durs, qui constitueront ensuite la couche coupante, est fondu sur le corps de base à l'aide d'un rayon laser, **caractérisé en ce qu'**un corps de base brut présentant au moins un enfoncement est utilisé et **en ce que** le corps de base brut muni de enfoncements est utilisé comme coquille pour la formation de la couche coupante, et **en ce que** les renfoncements du corps de base brut sont remplis par un procédé de revêtement jusqu'à l'épaisseur de couche désirée par apport et fusion continus du mélange de poudres métalliques contenant les matériaux durs à l'aide d'un rayon laser, et **en ce qu'**un corps coupant brut est obtenu, et **en ce que** les corps coupants désirés sont séparés par découpe du corps coupant brut.

2. Procédé selon la revendication 1, **caractérisé en ce que** le corps coupant brut est coupé dans la région du corps de base brut pour obtenir les corps coupants individuels.

3. Procédé selon la revendication 1 ou 2, **caractérisé en ce qu'**une barre ou un tube avec une symétrie de révolution et présentant des enfoncements sous la forme de gorges annulaires radiales ou de rainures s'étendant parallèlement à l'axe longitudinal ou de manière hélicoïdale est utilisé comme corps de base brut.

4. Procédé selon la revendication 1 ou 2, **caractérisé en ce qu'**une barre ou un tube avec une section polygonale et présentant des gorges annulaires radiales ou des rainures s'étendant parallèlement à l'axe longitudinal ou de manière hélicoïdale est utilisé comme corps de base brut.

5. Procédé selon l'une des revendications 1 à 4, **caractérisé en ce qu'**un disque muni de rainures sur sa face ou sur l'une de ses facettes est utilisé comme corps de base brut.

6. Procédé selon l'une des revendications 1 à 5, **caractérisé en ce qu'**après la réalisation de la couche coupante le corps de base brut est enlevé par zones entre les enfoncements remplis de la couche coupante

7. Procédé selon l'une des revendications 1 à 3, **caractérisé en ce qu'**un corps de base brut cylindrique ayant des dimensions englobant une pluralité de corps de base pour des corps coupants est prévu et **en ce qu'**un nombre de gorges annulaires correspondant à la pluralité de corps coupants, séparées par des épaulements intermédiaires, sont usinées dans le corps de base brut et **en ce que**, pendant la rotation du corps de base brut autour de son axe longitudinal, les gorges faisant office de coquilles sont remplies par un procédé de revêtement jusqu'à l'épaisseur de couche désirée par apport et fusion continus du mélange de poudres métalliques contenant les matériaux durs à l'aide du rayon laser, et **en ce que** le corps coupant brut obtenu est séparé, par découpe du corps de base brut dans la zone des épaulements intermédiaires, pour obtenir les corps coupants.

8. Procédé selon la revendication 7, **caractérisé en ce que** les épaulements intermédiaires du corps coupant brut sont enlevés au moins jusqu'à la profondeur des rainures, ce qui libère les côtés des couches coupantes déposées dans les gorges.

9. Procédé selon l'une des revendications 1 à 8, **caractérisé en ce qu'**une couche coupante contenant jusqu'à 99 % en poids de grains de diamant est réalisée.

10. Procédé selon l'une des revendications 1 à 9, **caractérisé en ce qu'**un corps de base brut en métal, comme de l'acier, est utilisé.

11. Procédé selon l'une des revendications 1 à 9, **caractérisé en ce qu'**un corps de base brut en une matière synthétique résiliente et résistante aux chocs sur les entailles, comme le polyamide, le polyimide, le polyuréthane, est utilisé.
